# EUROPÄISCHE PATENTANMELDUNG

(11) **EP 2 309 552 A1**
(43) Veröffentlichungstag der Anmeldung: **13.04.2011**
(21) Anmeldenummer: 09012682.2
(22) Anmeldetag: 07.10.2009
(51) Int. Cl.: H01L 31/042, H01L 31/048, E04F 13/08, F16B 5/02, F16B 5/06, F24J 2/52, F16B 5/00, F16B 37/04

(54) **Klemmaufnahme und Befestigungsvorrichtung zur Befestigung von plattenförmigen Bauelementen und Verfahren zur Herstellung der Befestigungsvorrichtung**

(71) Anmelder: Carl Freudenberg KG, 69469 Weinheim (DE)
(72) Erfinder: Barth, Armin, 69517 Gorxheimetal (DE)

(57) **Zusammenfassung**

Klemmaufnahme (1) zur Befestigung von plattenförmigen Bauelementen (2, 3) auf einem schienenförmigen Träger (4), umfassend ein aus einem gummielastischem Werkstoffe bestehendes, im wesentlichen quaderförmig ausgebildetes Auflageelement (5) mit einer Auflagefläche (6), wobei das Auflageelement (5) auf der der Auflagefläche (6) abgewandten Seite (7) einen im wesentlichen quaderförmig ausgebildeten Führungsnocken (8) aufweist, der sich im Wesentlichen quer zur Längsrichtung (9) des Auflageelement (5) erstreckt, wobei die Klemmaufnahme (1) von einer sich im wesentlichen senkrecht zur Auflagefläche erstreckenden Durchgangsbohrung (10) durchdrungen ist und wobei auf der der Auflagefläche (6) axial abgewandten Seite der Durchgangsbohrung (10) in der Durchgangsbohrung (10) eine Stützhülse (11) angeordnet ist, die eine Befestigungseinrichtung (12) aufweist.

## Beschreibung

### Technisches Gebiet

Klemmaufnahmen und Befestigungsvorrichtungen zur Befestigung von plattenförmigen Bauelementen, wie zum Beispiel Fotovoltaikmodulen sowie Verfahren zur Herstellung der Befestigungsvorrichtungen sind allgemein bekannt.

### Stand der Technik

Die vorbekannten Klemmaufnahmen und Befestigungsvorrichtungen sowie die vorbekannten Verfahren zur deren Herstellung sind aufwendig und in wirtschaftlicher Hinsicht wenig zufriedenstellend. Die Klemmaufnahmen und Befestigungsvorrichtungen bestehen aus einer Vielzahl von Einzelteilen, die jeweils vor Ort, zum Beispiel an senkrechten Wänden oder auf Satteldächem, aufwendig montiert werden müssen. Durch die Vielzahl der Einzelteile ist das Handling während der Montage erschwert. Die miteinander zu montierenden Einzelteile verrutschen häufig relativ zueinander. Auch zur Anwendung gelangende Muttern und Beilegscheiben, die montiert werden müssen, können während der Montage leicht verloren gehen.

### Darstellung der Erfindung

Der Erfindung liegt die Aufgabe zu grunde, eine Klemmaufnahme, eine Befestigungsvorrichtung damit und ein Verfahren zur Herstellung der Befestigungsvorrichtung derart weiterzuentwickeln, dass die Klemmaufnahme und die Befestigungsvorrichtung einen einfachen und teilarmen Aufbau aufweisen und deshalb einfach und kostengünstig herstellbar sind und dass die Herstellung der Befestigungsvorrichtung und deren Montage vereinfacht sind. Insbesondere soll die Montage an senkrechten Wänden oder auf schrägstehenden Flächen, wie beispielsweise dem Satteldach eines Hauses, vereinfacht werden.

Diese Aufgabe wird erfindungsgemäß durch eine Klemmaufnahme gemäß Anspruch 1, eine Befestigungsvorrichtung gemäß Anspruch 11 und ein Verfahren zur Herstellung einer Befestigungsvorrichtung gemäß Anspruch 16 gelöst. Auf vorteilhafte Ausgestaltungen nehmen die darauf jeweils rückbezogenen Unteransprüche Bezug.

Zur Lösung der Aufgabe ist eine Klemmaufnahme zur Befestigung von plattenförmigen Bauelementen auf einem schienenförmigen Träger vorgesehen, umfassend ein aus einem elastomeren Werkstoff bestehendes, im Wesentlichen quaderförmig ausgebildetes Auflageelement mit einer Auflagefläche, wobei das Auflageelement auf der der Auflagefläche abgewandten Seite einen im Wesentlichen quaderförmig ausgebildeten Führungsnocken aufweist, der sich im Wesentlichen quer zur Längsrichtung des Auflageelements erstreckt, wobei die Klemmaufnahme von einer sich im Wesentlichen senkrecht zur Auflagefläche erstreckenden Durchgangsbohrung durchdrungen ist und wobei auf der der Auflagefläche axial abgewandten Seite der Durchgangsbohrung in der Durchgangsbohrung eine Stützhülse angeordnet ist, die eine Befestigungseinrichtung aufweist.

Die plattenförmigen Bauelemente sind bevorzugt als Fotovoltaikmodule ausgebildet.

Auch Verkleidungselemente für Fassaden von Häusern können durch die Befestigungsvorrichtung befestigt werden.

Die zuvor beschriebene Klemmaufnahme ist nur ein Bauteil, das sowohl das Auflageelement mit der Auflagefläche für die Bauelemente umfasst als auch die Befestigungseinrichtung für die Befestigung am Träger mittels des Führungsnockens.

Der Führungsnocken bildet zusammen mit dem schienenförmigen Träger einen Bajonettverschluss. Die Montage der Klemmaufnahme mit dem Träger erfolgt derart, dass zunächst der Führungsnocken der Klemmaufnahme an der passenden Stelle von oben in eine Führungsnut des Trägers eingesetzt und anschließend um 90 ° relativ zum Träger verdreht wird. Durch diese Verdrehung erfolgt eine kraft- und/oder formschlüssige Verbindung zwischen der Klemmaufnahme und dem Träger, so dass die mit dem Träger verbundene Klemmaufnahme nun nicht mehr verrutscht und dem Träger ortsfest zugeordnet ist, auch dann, wenn der Träger auf einem Satteldach eines Hauses montiert ist. Anschließend können die Fotovoltaikmodule auf die Klemmaufnahme aufgelegt und, wie später noch beschrieben wird, durch eine Klemmkappe befestigt werden. Einer Befestigung der Klemmaufnahme an dem Träger mittels Schrauben und Bellegscheiben bedarf es daher nicht. Die Montage der einteiligen Klemmaufnahme auf den Träger ist dadurch besonders einfach.

Die Durchgangsbohrung kann in Längsrichtung und in Querrichtung des Auflageelements jeweils mittig angeordnet sein. Durch die zentral angeordnete Durchgangsbohrung ist, während der bestimmungsgemäßen Verwendung der Befestigungsvorrichtung, eine Befestigungsschraube geführt und mit der Befestigungseinrichtung verbunden. dadurch sind die Fotovoltaikmodule in der Befestigungsvorrichtung fixiert.

Die Befestigungseinrichtung kann durch ein Innengewinde der Stützhülse selbst gebildet sein. Die Stützhülse kann in einem solchen Fall aus einem metallischen oder aus einem polymeren Werkstoff bestehen. Die Stützhülse ist in erster Linie vorgesehen, um eine gleichbleibend gute räumliche Zuordnung und guter Haltbarkeit des Führungsnockens relativ zum Auflageelement sicherzustellen. Wird das Innengewinde, wie hier beschrieben, unmittelbar in der Stützhüsle angebracht, weist die Klemmaufnahme insgesamt einen besonders teilarmen Aufbau auf.

Nach einer anderen Ausgestaltung kann es vorgesehen sein, dass die Befestigungseinrichtung durch ein Insert mit Innengewinde gebildet ist, dass von der Stützhülse stoff-, kraft- und/oder formschlüssig umschlossen ist. Die Stützhülse kann beispielsweise aus einem polymeren Werkstoff bestehen, wobei das Insert mit dem Innengewinde stoffschlüssig mit der Stützhülse durch Umspritzen verbunden ist. Das insert kann aus einem metallischen Werkstoff bestehen.

Das Auflageelement kann einen Abstandhalter umfassen, wobei die Auflagefläche auf der dem Führungsnocken axial abgewandten Seite von dem Abstandhalter überragt ist. Der Abstandhalter fungiert als Anschlag für die Fotovoltaikmodule, so dass diese einfach und schnell in die richtige Position, bezogen auf die Klemmaufnahme, gebracht werden können.

Der Abstandhalter kann stegförmig ausgebildet sein und sich in Längsrichtung des Auflageelements zwischen dessen Stirnseiten erstrecken. Dadurch, dass sich der Abstandhalter über die gesamte Länge des Auflageelements erstreckt, sind die Fotovoltaikmodule in der Befestigungseinrichtung gut geführt.

Der Abstandhalter kann in Querrichtung des Auflageelements mittig auf diesem angeordnet sein. Dadurch ist die Klemmaufnahme, in Querrichtung betrachtet, symmetrisch zum Abstandhalter ausgebildet. Jedes Auflageelement nimmt jeweils zwei Fotovoltaikmodule auf, wobei die Ränder einander benachbarter Fotovoltaikmodule durch den Abstandhalter voneinander getrennt sind.

Die Stützhülse kann eine Höhe aufweisen, die der Höhe des Auflageelements einschließlich der Höhe des Führungsnockens und der Höhe des Abstandhalters entspricht. Eine solch hohe Stützhülse kann vorgesehen sein, wenn die Klemmaufnahme aus einem polymeren Werkstoff mit geringer Shorehärte besteht. Dadurch erhält die Klemmaufnahme Stabilität, ebenso bleibt die herstellungsbedingte Zuordnung des Abstandhalters und des Führungsnockens, jeweils relativ zum Auflageelement, während der Gebrauchsdauer erhalten.

Gelangt demgegenüber ein gummielastischer Werkstoff mit ausreichend hoher Shorehärte, wie beispielsweise ein EPDM-Werkstoff, zur Anwendung, kann die Stützhülse deutlich kürzer ausgebildet sein, beispielsweise nur im Bereich des Führungsnockens, um die Befestigungseinrichtung sicher aufzunehmen. Einer Stabilisierung des Abstandhalters zum Auflageelement bedarf es wegen des besonders geeigneten Werkstoffs dann nicht.

Das Auflageelement, der Führungsnocken und der Abstandhalter können einstückig und materialeinheitlich ausgebildet sein. Im Hinblick auf eine einfache und kostengünstige Fertigung ist das von hervorzuhebendem Vorteil, ebenso wie im Hinblick auf eine problemlose Montage, insbesondere auf schrägen Flächen.

Außerdem betrifft die Erfindung eine Befestigungsvorrichtung für plattenförmige Bauelemente, umfassend eine Klemmaufnahme, wie zuvor beschrieben, mit einem schienenförmigen Träger und einer Klemmkappe, wobei die Klemmkappe mittels einer Befestigungsschraube mit dem Aufnahmeelement verbunden ist, wobei die Bauelemente zwischen der Aufnahmefläche des Aufnahmeelements der Klemmauflage und der Klemmkappe einklemmbar sind, wobei der Träger eine Führungsnut aufweist, in der der Führungsnocken während der bestimmungsgemäßen Verwendung ortsfest und verliersicher angeordnet ist.

Die plattenförmigen Bauelemente sind bevorzugt als Fotovoltaikmodule ausgebildet.

Auch Verkleidungselemente für Fassaden von Häusern können durch die Befestigungsvorrichtung befestigt werden.

Die gesamte Befestigungsvorrichtung besteht demnach aus nur drei miteinander zu montierenden Einzelteilen, nämlich der Klemmaufnahme, der Klemmkappe und der Befestigungsschraube zur Verbindung der Klemmkappe mit der Klemmaufnahme. Dieser extrem teilearme Aufbau führt zu einem außerordentlich einfachen Handling bei der Montage von Fotovoltaikmodulen und zwar auch dann, wenn die Fläche, auf der der Träger montiert ist, sehr schräg oder senkrecht verläuft.

Die ortsfeste und verliersichere Anordnung der Klemmaufnahme im Träger erfolgt durch einen Kraft- und Formschluss, wenn die Längsrichtung der Klemmaufnahme parallel zur Längsrichtung des Trägers verläuft.

Die Klemmaufnahme und der Träger bilden eine vormontierbare Einheit. Zur Montage werden die Fotovoltaikmodule auf die vormontierte Einheit gelegt und durch die Klemmkappe, die mittels der Befestigungsschraube mit der Klemmaufnahme verbunden ist, in ihrer Position fixiert.

Die Klemmkappe kann auf der der Auflagefläche zugewandten Seite eine Klemmfläche aus gummielastischem Werkstoff aufweisen. Die Fotovoltaikmodule sind dadurch ausschließlich von gummielastischem Werkstoff berührt, weil sowohl die Klemmaufnahme als auch die Klemmfläche der Klemmkappe jeweils aus gummielastischem Werkstoff bestehen. Dadurch werden Toleranzen der Fotovoltaikmodule und/oder Fertigungstoleranzen der Befestigungsvorrichtung ausgeglichen und einer möglichen Beschädigung der Fotovoltaikmodule bei ihrer Montage vorgebeugt.

Die Klemmkappe kann aus einem Polymer oder aus Aluminium bestehen. Ein solcher Werkstoff ist rostfrei und gegen die meisten Umwelteinflüsse resistent.

Die Führungsnut kann auf der dem Auflageelement zugewandten Seite eine Verengung aufweisen, mit einer lichten Weite, die der Ausdehnung des Führungsnockens in Längsrichtung des Auflageelements entspricht, wobei die Führungsnut eine Breite aufweist, die der Ausdehnung des Führungsnockens in Querrichtung des Auflageelements entspricht. Durch eine solche Ausgestaltung wird der Bajonettverschluss zwischen dem Führungsnocken und dem Träger gebildet.

Die Erfindung betrifft außerdem ein Verfahren zur Herstellung einer Befestigungsvorrichtung wie zuvor beschrieben, wobei in einem ersten Verfahrensschritt der Führungsnocken der Klemmaufnahme, bevorzugt von oben, in die Führungsnut des Trägers eingesetzt und in einem zweiten Verfahrensschritt um 90° relativ zum Träger verdreht wird, wobei in einem dritten Verfahrensschritt jeweils ein plattenförmiges Bauelement beiderseits benachbart zum Abstandhalter auf die Auflagefläche gelegt und jeweils an den Abstandhalter geschoben wird, wobei in einem vierten Verfahrensschritt die Klemmkappe auf die Klemmaufnahme und die Bauelemente gesetzt und in einem fünften Verfahrensschritt mittels der Befestigungsschraube mit der Klemmaufnahme verschraubt wird.

Die plattenförmigen Bauelemente sind bevorzugt als Fotovoltaikmodule ausgebildet.

Auch Verkleidungselemente für Fassaden von Häusern können durch die Befestigungsvorrichtung befestigt werden.

Der Bajonettverschluss wird also dadurch gebildet, das die Klemmaufnahme zunächst quer zum Träger positioniert wird und dadurch der Führungsnocken von oben in die Führungsnut eingeführt werden Anschließend wird die Klemmaufnahme um 90° relativ zum Träger verdreht. Dadurch verdreht sich auch der Führungsnocken um 90 ° relativ zum Träger und füllt dadurch den Querschnitt der Führungsnut im Wesentlichen vollständig aus. Dadurch sind die beiden Teile formschlüssig miteinander verbunden. Die Klemmaufnahme kann nicht mehr senkrecht aus der Führungsnut herausgezogen werden. Auch eine Verschiebung in Längsrichtung der Führungsnut ist nur noch mit erhöhtem Kraftaufwand möglich, weil der Führungsnocken in dieser Richtung kraftschlüssig in seiner Position gehalten ist. Die Längsrichtung der Klemmaufnahme erstreckt sich dann parallel zur Längsrichtung des Trägers.

### Kurzbeschreibung der Zeichnung

Ein Ausführungsbeispiel der erfindungsgemäßen Befestigungsvorrichtung wird nachfolgend anhand der Figuren 1 bis 7 näher erläutert. Diese zeigen jeweils in schematischer Darstellung:
- Fig. 1: ein Ausführungsbeispiel der erfindungsgemäßen Befestigungsvorrichtung in Form einer Explosionszeichnung,
- Fig. 2: die Befestigungsvorrichtung aus Fig. 1 während der Montage nach dem ersten Verfahrensschritt,
- Fig. 3: die Befestigungsvorrichtung aus Fig. 2 im Anschluss an den zweiten Verfahrensschritt.
- Fig. 4: die Befestigungsvorrichtung aus Fig. 3 mit montierter dachförmiger Klemmkappe und zwei Fotovoltaikmodulen,
- Fig. 5: die Klemmaufnahme aus den Figuren 1 bis 4 in perspektivischer Darstellung und einer Ansicht von unten,
- Fig. 6: die Klemmaufnahme aus Fig. 5, in Längsrichtung mittig geschnitten in einer perspektivischen Draufsicht, mit niedriger Stützhülse,
- Fig. 7: die Klemmaufnahme aus Fig. 5, in Längsrichtung mittig geschnitten in einer perspektivischen Draufsicht, mit hoher Stützhülse.

### Ausführung der Erfindung

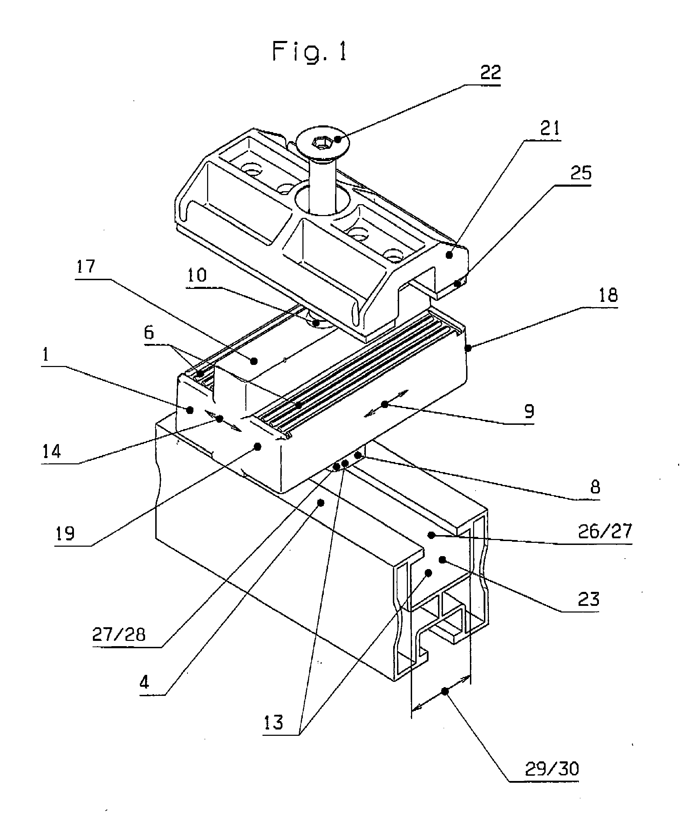

In den Figuren 1 bis 4 ist ein Ausführungsbeispiel der erfindungsgemäßen Befestigungsvorrichtung für Fotovoltaikmodule 2, 3 gezeigt.

Die Befestigungsvorrichtung für Fotovoltaikmodule 2, 3 umfasst die Klemmaufnahme 1, die auf dem schienenförmigen Träger 4 montierbar ist. Die Klemmaufnahme 1 besteht im hier gezeigten Ausführungsbeispiel aus dem elastomeren Werkstoff EPDM. Das Auflageelement 5 der Klemmaufnahme 1 ist quarderförmig ausgebildet und weist eine Auflagefläche 6 für die Fotovoliaikmodule 2, 3 auf. Zur Montage der Klemmaufnahme 1 mit dem Träger 4 ist der quarderförmig ausgebildete Führungsnocken 8 vorgesehen, der auf der der Auflagefläche 6 abgewandten Seite des Auflageelements 5 angeordnet ist. Der Führungsnocken 8 erstreckt sich quer zur Längsrichtung 9 des Auflageelements 5. Die Klemmaufnahme 1 weist außerdem eine sich senkrecht zur Auflagefläche 6 erstreckende Durchgangsbohrung 10 auf. Auf der der Auflagefläche 6 axial abgewandten Seite der Durchgangsbohrung 10 ist in der Durchgangsbohrung 10 eine Stützhülse 11 angeordnet, die eine Befestigungsvorrichtung 12 aufweist.

Der schienenförmige Träger 4 kann beispielsweise durch ein Aluminiumprofil gebildet sein, und die Klemmkappe 21 kann aus einem polymeren oder einem metallischen Werkstoff, wie z. B. Aluminium, bestehen. Die Klemmkappe 21 wird mittels der Befestigungsschraube 22 mit der Klemmaufnahme 1 verbunden. Die Fotovoltaikmodule 2, 3 liegen auf der Auflagefläche 6 des Auflageelements 5 auf und werden durch die Klemmkappe 21 in ihrer Position gehalten. Außerdem wird durch die Befestigungsschraube 22 die Klemmaufnahme 1 gegenüber dem Träger 4 verspannt.

In Figur 1 ist eine Explosionszeichnung der Befestigungsvorrichtung gezeigt. Die Befestigungvorrichtung besteht aus der aus dem polymeren Werkstoff bestehenden Klemmaufnahme 1, der Klemmkappe 21 und der Befestigungsschraube 22, weist dadurch einen teilarmen und einfachen Aufbau auf und ist kostengünstig herstellbar. Auch die Montage der Befestigungsvorrichtung ist durch den teilarmen Aufbau sehr einfach. In einem ersten Verfahrensschritt wird der Führungsnocken 8 der Klemmaufnahme 1 in die Führungsnut 23 des Trägers 4 eingesetzt.

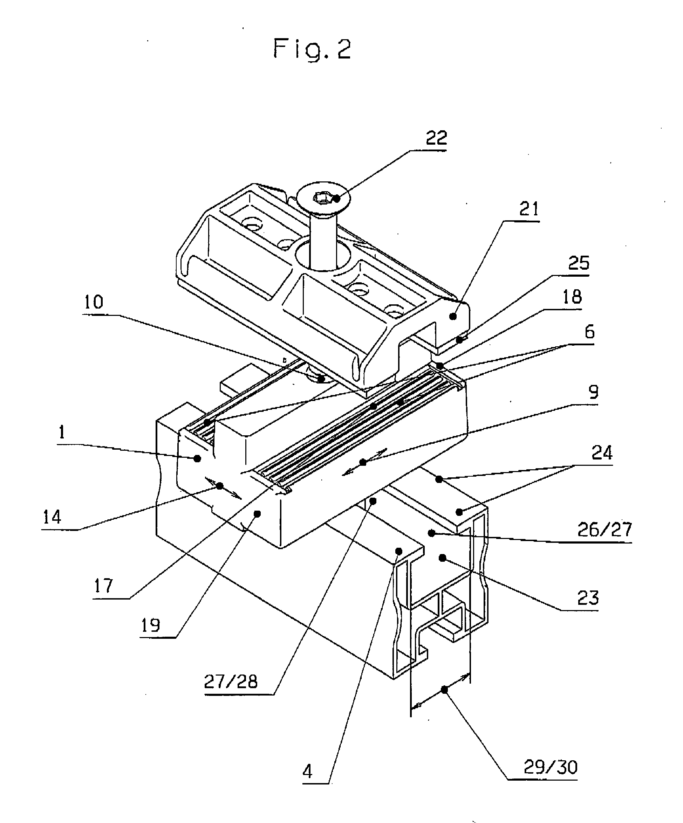

Dieser erste Verfahrensschritt ist in Figur 2 gezeigt. Es ist zu erkennen, dass die Führungsnut 23 auf der dem Auflageelement 5 zugewandten Seite eine Verengung 26 aufweist, mit einer lichten Weite 27, die der Ausdehnung 28 des Führungsnockens 8 in Längsrichtung 9 des Auflageelements 5 entspricht. Dadurch lässt sich die Klemmaufnahme 9 an jeder beliegen Stelle des Trägers 4 von oben in die Führungsnut 23 einsetzen. Eine Feinjustierung kann durch eine Verschiebung der Klemmaufnahme 1 innerhalb der Führungsnut 23 vorgenommen werden.

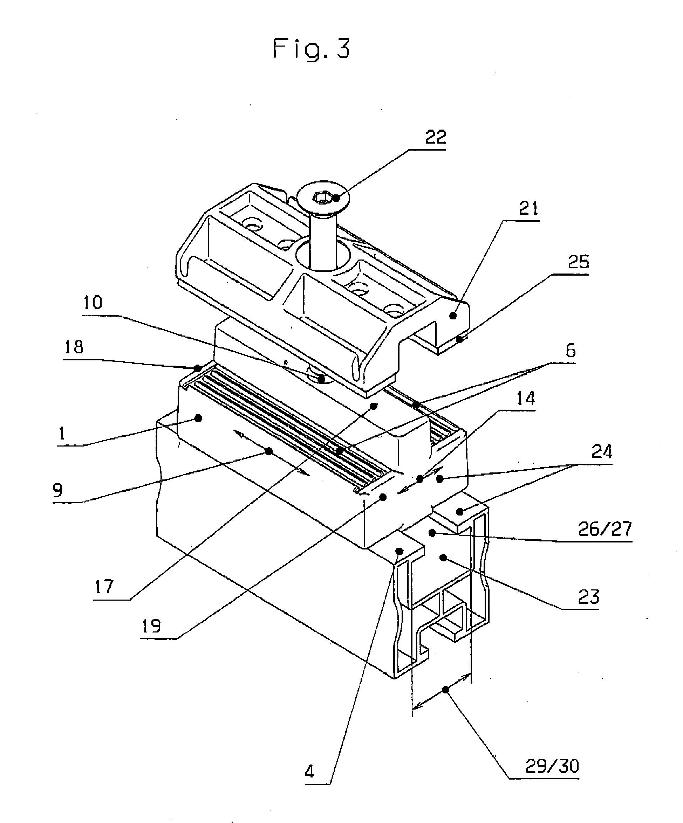

In Figur 3 ist der zweite Verfahrensschritt gezeigt. Die Klemmaufnahme 1 aus Figur 2 wurde im zweiten Verfahrensschritt um 90° relativ zum Träger 4 verdreht. Es ist zu erkennen, dass die Führungsnut 23 eine Breite 29 aufweist, die der Ausdehnung 30 des Führungsnockens 8 in Querrichtung 14 des Auflageelements 5 entspricht, Im Anschluss an den zweiten Verfahrensschritt ist die Klemmaufnahme 1 mit dem Träger 4 formschlüssig verbunden. Die Klemmaufnahme 1 ist ortsfest und verliersicher mit dem Träger 4 verbunden. Der Führungsnocken 8 bildet zusammen mit dem schienenförmigen Träger 4 den Bajonettverschluss 13. Die Klemmaufnahme 1 und der Träger 4 bilden dann, wie hier dargestellt, die vormontierbare Einheit 24.

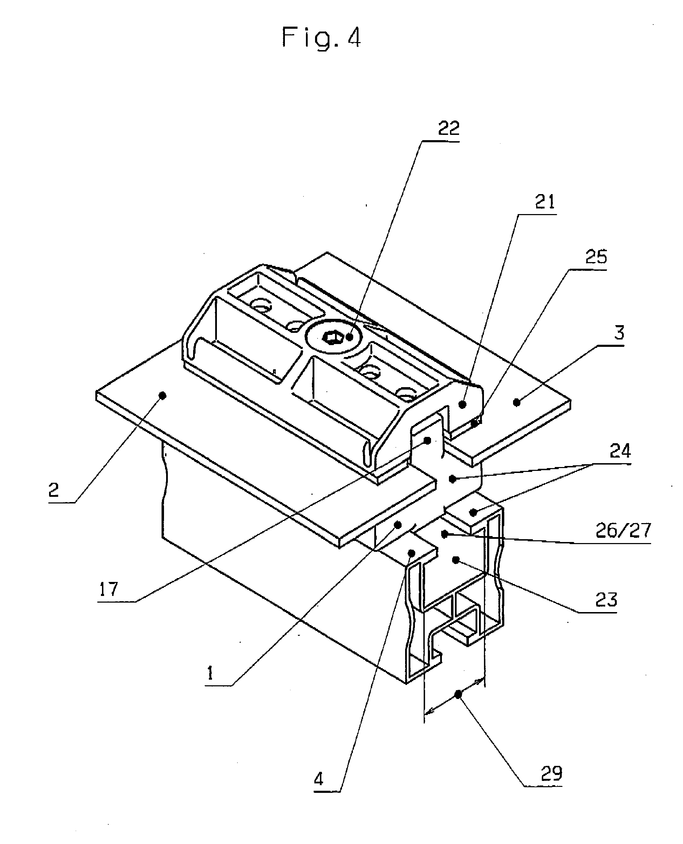

In Figur 4 ist die Befestigungsvorrichtung aus den Figuren 1 bis 3 im zusammengebauten Zustand gezeigt, wobei auch die Fotovoltaikmodule 2, 3 in der Befestigungsvorrichtung eingeklemmt sind. Die Klemmkraft, mit der die Fotovoltaikmodule 2, 3 gehalten sind, wird durch die Befestigungsschraube 22 aufgebracht.

Im dritten Verfahrensschritt werden die beiden Fotovoltaikmodule 2, 3 beiderseits benachbart zum Abstandhalter 17 auf die Auflagefläche 6 gelegt und jeweils an den Abstandhalter 17 geschoben. Im vierten Verfahrensschritt wird dann die Klemmkappe 21 auf die Klemmaufnahme 1 und die Fotovoltaikmodule 2, 3 gesetzt und in einem fünften Verfahrensschritt mittels der Befestigungsschraube 22 mit der Klemmaufnahme 1 verschraubt. Das Gewinde der Befestigungsschraube 22 greift in die Befestigungseinrichtung 12 der Stützhülse 11. Die Befestigungseinrichtung 12 kann entweder durch ein Innengewinde 15 der Stützhülse 11 selbst gebildet sein, oder in der Stützhülse 11 kann ein Insert 16 mit Innengewinde 15 eingesetzt sein, das von der Stützhülse 11 stoff- kraft- und/oder formschlüssig umschlossen ist. Um eine Beschädigung der Fotovoltaikmodule 2, 3 zu vermeiden und um Fertigungstoleranzen auszugleichen weist die Klemmkappe 21 auf der der Auflagefläche 6 zugewandten Seite eine Klemmfläche 25 auf, die ebenso, wie das Auflageelement 5, aus einem elastomeren Werkstoff besteht. Dadurch ist die Befestigungsvorrichtung besonders gut für Fotovoltaikmodule 2, 3 geeignet, die als rahmenlose Dünnschichtmodule mit Dicken von 3 bis 14 mm ausgebildet sind.

Die Auflagefläche 6 wird von dem Abstandhalter 17 überragt, der stegförmig ausgebildet ist und sich in Längsrichtung 9 des Auflageelements 5 zwischen dessen Stirnseiten 18, 19 erstreckt.

Das Auflageelement 5, der Führungsnocken 8 und der Abstandhalter 17 sind einstückig und materialeinheitlich ausgebildet. Der Abstandhalter 17 ist in Querrichtung 14 des Auflageelements 5 mittig auf diesem angeordnet und wird von der Durchgangsbohrung 10 senkrecht durchdrungen, die in Längsrichtung 9 und in Querrichtung 14 des Auflageelements 5 jeweils mittig angeordnet ist.

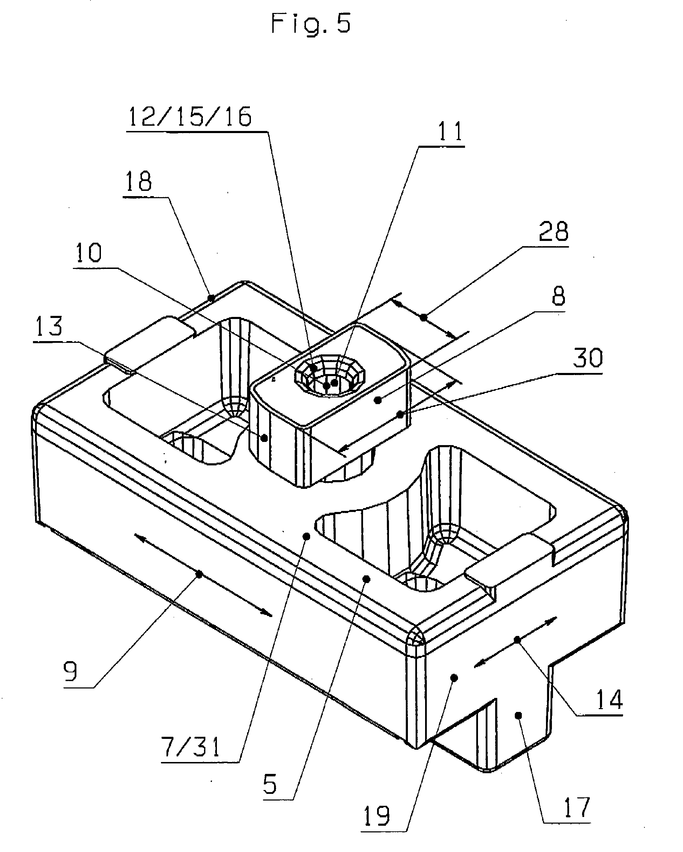

In Figur 5 ist die Klemmaufnahme 1 aus den Figuren 1 bis 4 in einer perspektivischen Darstellung von unten gezeigt. Hier ist zu erkennen, dass der Führungsnocken 8 in Querrichtung 14 des Auflageelements 5 angeordnet ist, um mit dem schienenförmigen Träger 4 den Bajonettverschluss 13 bilden zu können.

Im hier gezeigten Ausführungsbeispiel umschließt die Stützhülse 11 ein Insert 16 mit Innengewinde 15 stoffschlüssig.

Alternativ kann es vorgesehen sein, dass die Stützhülse 11 innenseitig direkt das Innengewinde 15 aufweist.

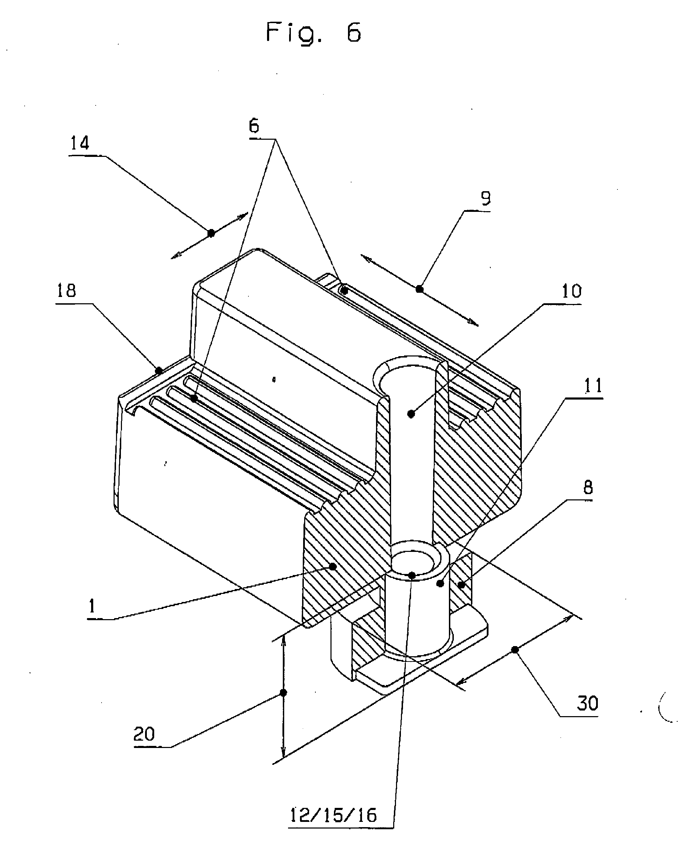

In Figur 6 ist die Klemmaufnahme 1 im Querschnitt durch die Durchgangsbohrung 10 gezeigt. Die Stützhülse 11 erstreckt sich durch den Führungsnocken 8 bis zur Unterseite 31 des Auflageelements 5.

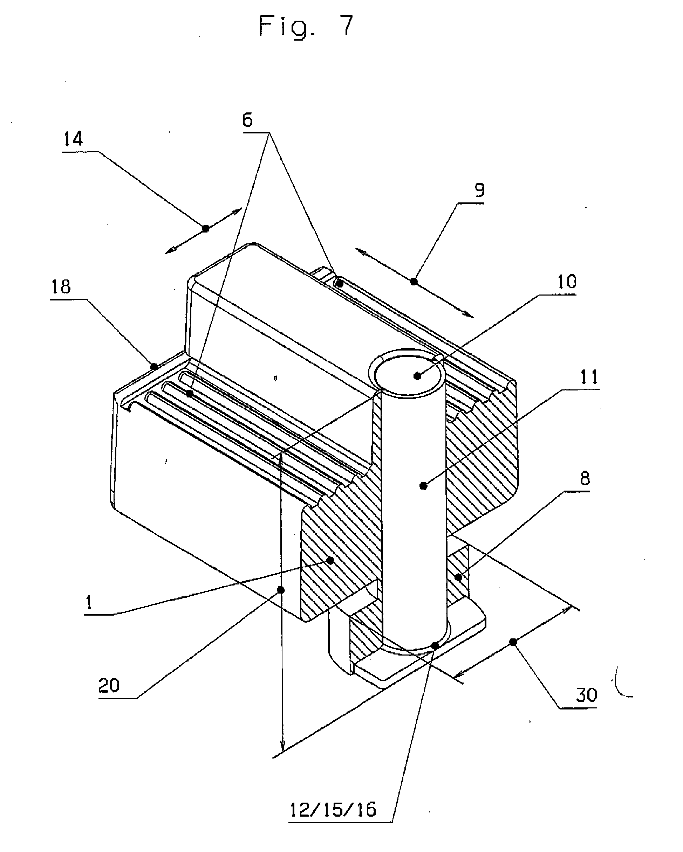

Je nach Anwendungsfall, insbesondere abhängig von der Shorehärte der Klemmaufnahme 1, kann die Stützhülse 11, wie in Figur 7 dargestellt, eine Höhe 20 aufweisen, die der Höhe des Auflageelements 5 einschließlich der Höhe des Führungsnockens 8 und der Höhe des Abstandhalters 17 entspricht. Die Klemmaufnahme 1 aus Figur 7 kann anstelle der Klemmaufnahme 1 aus Figur 6 in der Befestigungsvorrichtung gemäß Figuren 1 bis 4 alternativ zur Anwendung gelangen.

## Patentansprüche

1. Klemmaufnahme (1) zur Befestigung von plattenförmigen Bauelementen (2, 3) auf einem schienenförmigen Träger (4), umfassend ein aus einem elastomeren Werkstoff bestehendes, im wesentlichen quaderförmig ausgebildetes Auflageelement (5) mit einer Auflagefläche (6), wobei das Auflageelement (5) auf der der Auflagefläche (6) abgewandten Seite (7) einen im wesentlichen quaderförmig ausgebildeten Führungsnocken (8) aufweist, der sich im Wesentlichen quer zur Längsrichtung (9) des Auflageelements (5) erstreckt, wobei die Klemmaufnahme (1) von einer sich im wesentlichen senkrecht zur Auflagefläche (6) erstreckenden Durchgangsbohrung (10) durchdrungen ist und wobei auf der der Auflagefläche (6) axial abgewandten Seite der Durchgangsbohrung (10) in der Durchgangsbohrung (10) eine Stützhülse (11) angeordnet ist, die eine Befestigungseinrichtung (12) aufweist.

2. Klemmaufnahme nach Anspruch 1, **dadurch gekennzeichnet, dass** der Führungsnocken (8) zusammen mit dem schienenförmigen Träger (4) einen Bajonettverschluss (13) bildet.

3. Klemmaufnahme nach Anspruch 1, **dadurch gekennzeichnet, dass** die Durchgangsbohrung (10) in Längsrichtung (9) und in Querrichtung (14) des Auflageelements (5) jeweils mittig angeordnet ist

4. Klemmaufnahme nach Anspruch 1, **dadurch gekennzeichnet, dass** die Befestigungseinrichtung (12) durch ein Innengewinde (15) der Stützhülse (11) gebildet ist.

5. Klemmaufnahme nach Anspruch 1, **dadurch gekennzeichnet, dass** die Befestigungseinrichtung (12) durch ein Insert (16) mit Innengewinde (15) gebildet ist, das von der Stützhülse (11) stoff-, kraft- und/oder formschlüssig umschlossen ist.

6. Klemmaufnahme nach einem der Ansprüche 1 bis 5, **dadurch gekennzeichnet, dass** das Auflageelement (5) einen Abstandshalter (17) umfasst und dass die Auflagefläche (6) auf der dem Führungsnocken (8) axial abgewandten Seite von dem Abstandhalter (17) überragt ist.

7. Klemmaufnahme nach Anspruch 6, **dadurch gekennzeichnet, dass** der Abstandhalter (17) stegförmig ausgebildet ist und sich in Längsrichtung (9) des Auflageelements (5) zwischen dessen Stirnseiten (18, 19) erstreckt.

8. Klemmaufnahme nach einem der Ansprüche 6 oder 7, **dadurch gekennzeichnet, dass** der Abstandhalter (17) in Querrichtung (14) des Auflageelements (5) mittig auf diesem angeordnet ist.

9. Klemmaufnahme nach einem der Ansprüche 1 bis 8, **dadurch gekennzeichnet, dass** die Stützhülse (11) eine Höhe (20) aufweist, die der Höhe des Auflageelementes (5) einschließlich der Höhe des Führungsnockens (8) und der Höhe des Abstandhalters (17) entspricht.

10. Klemmaufnahme nach einem der Ansprüche 1 bis 9, **dadurch gekennzeichnet, dass** das Auflageelement (5), der Führungsnocken (8) und der Abstandhalter (17) einstückig und materialeinheitlich ausgebildet sind.

11. Befestigungsvorrichtung für plattenförmige Bauelemente (2, 3), umfassend eine Klemmaufnahme (1) nach einem der Ansprüche 1 bis 10, einen schienenförmigen Träger (4) und eine Klemmkappe (21), wobei die Klemmkappe (21) mittels einer Befestigungsschraube (22) mit der Klemmaufnahme (1) verbunden ist, wobei die Bauelemente (2, 3) zwischen der Auflagefläche (6) des Auflageelementes (5) der Klemmaufnahme (1) und der Klemmkappe (21) einklemmbar sind, wobei der Träger (4) eine Führungsnut (23) aufweist, in der der Führungsnocken (8) während der bestimmungsgemäßen Verwendung ortsfest und verliersicher angeordnet ist.

12. Befestigungsvorrichtung nach Anspruch 11, **dadurch gekennzeichnet, dass** die Klemmaufnahme (1) und der Träger (4) eine vormontierbare Einheit (24) bilden.

13. Befestigungsvorrichtung nach einem der Ansprüche 11 oder 12, **dadurch gekennzeichnet, dass** die Klemmkappe (21) auf der der Auflagefläche (6) zugewandten Seite eine Klemmfläche (25) aus gummielastischem Werkstoff aufweist.

14. Befestigungsvorrichtung nach einem der Ansprüche 11 bis 13, **dadurch gekennzeichnet, dass** die Klemmkappe (21) aus einem Polymer oder aus Aluminium besteht.

15. Befestigungsvorrichtung nach einem der Ansprüche 11 bis 14, **dadurch gekennzeichnet, dass** die Führungsnut (23) auf der dem Auflageelement (5) zugewandten Seite eine Verengung (26) aufweist, mit einer lichten Weite (27), die der Ausdehnung (28) des Führungsnockens (8) in Längsrichtung (9) des Auflageelements (5) entspricht und dass die Führungsnut (23) eine Breite (29) aufweist, die der Ausdehnung (30) des Führungsnockens (8) in Querrichtung (14) des Auflageelementes (5) entspricht.

16. Verfahren zur Herstellung einer Befestigungsvorrichtung nach einem der Ansprüche 11 bis 15, **dadurch gekennzeichnet, dass** in einem ersten Verfahrensschritt der Führungsnocken (8) der Klemmaufnahme (1) in die Führungsnut (23) des Trägers (4) eingesetzt und in einem zweiten Verfahrensschritt um 90° relativ zum Träger (4) verdreht wird, dass in einem dritten Verfahrensschritt jeweils ein plattenförmiges Bauelement (2, 3) beiderseits benachbart zum Abstandhalter (17) auf die Auflagefläche (6) gelegt und jeweils an den Abstandhalter (17) geschoben wird, dass in einem vierten Verfahrensschritt die Klemmkappe (21) auf die Klemmaufnahme (1) und die Bauelemente (2, 3) gesetzt und in einem fünften Verfahrensschritt mittels der Befestigungsschraube (22) mit der Klemmaufnahme (1) verschraubt wird.
